(19) Europäisches Patentamt
European Patent Office
Office européen des brevets

(11) Numéro de publication: **0 020 185**
**B1**

(12) **FASCICULE DE BREVET EUROPEEN**

(45) Date de publication du fascicule du brevet: **23.11.83**

(51) Int. Cl.$^3$: **G 06 F 7/50**

(21) Numéro de dépôt: **80400354.9**

(22) Date de dépôt: **17.03.80**

# (54) Procédé et dispositif d'addition, de manière parallèle-série d'un grand nombre de mots.

(30) Priorité: **12.04.79 FR 7909325**

(43) Date de publication de la demande:
**10.12.80 Bulletin 80/25**

(45) Mention de la délivrance du brevet:
**23.11.83 Bulletin 83/47**

(84) Etats contractants désignés:
**BE DE GB IT SE**

(56) Documents cités:
**US - A - 3 636 334**

**IEEE TRANSACTIONS ON COMPUTERS, vol. C17, no. 10, octobre 1968 NEW YORK (US) KOUVARAS et al.: "A digital System of Simultaneous Addition of Several Binary Numbers", pages 992-997**

(73) Titulaire: **THOMSON-CSF TELEPHONE**
**146, Boulevard de Valmy**
**F-92707 Colombes (FR)**

(72) Inventeur: **Houdard, Jean-Pierre**
**"THOMSON-CSF" - SCPI 173 Boulevard Haussmann**
**F-75360 Paris Cedex 08 (FR)**
Inventeur: **Julie, Jean-Jacques**
**"THOMSON-CSF" - SCPI 173 Boulevard Haussmann**
**F-75360 Paris Cedex 08 (FR)**
Inventeur: **Leoni, Bernard Georges**
**"THOMSON CSF" - SCPI 173 Boulevard Haussmann**
**F-75360 Paris Cedex 08 (FR)**

(74) Mandataire: **Thrierr, Françoise et al,**
**THOMSON-CSF SCPI 173, Bld Haussmann**
**F-75379 Paris Cedex 08 (FR)**

**EP 0 020 185 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# Procédé et dispositif d'addition, de manière parallèle-série d'un grand nombre de mots

La présente invention se rapporte à un procédé de traitement de mots binaires pour en effectuer l'addition simultanée, et à un dispositif additionneur pour la mise en oeuvre de ce procédé.

Les additionneurs numériques actuellement utilisés pour additionner plusieurs nombres binaires, ayant chacun un grand nombre d'éléments binaires, comportent une cascade de cellules additionneuses réalisant chacune deux fonctions booléennes à trois variables, la retenue se propageant de cellule en cellule, ce qui nécessite un temps de calcul relativement long. Pour diminuer le retard dû à la propagation de la retenue, on a recours à des circuits supplémentaires fournissant une retenue anticipée. Cependant, l'encombrement de ces derniers additionneurs devient prohibitif lorsque le format des mots binaires à additionner augmente.

Dans de nombreuses applications des additionneurs, par exemple dans les filtres numériques, les transformateurs de Fourier, les corrélateurs numériques en temps réel, il est nécessaire d'effectuer un grande nombre d'additions en un temps court, par exemple environ 65 millions d'additions par seconde sur des mots de 16 éléments binaires (bits) dans certains filtres numériques transversaux. Dans de tels cas, même les additionneurs rapides à retenue anticipée ne conviennent plus.

On connait d'après US—A—3 636 334 un additionneur parallèle-parallèle effectuant l'addition des bits de même poids pour tous les poids des mots à additionner. Cet additionneur connu fonctionne très rapidement, mais n'est avantageux que pour un petit nombre de mots à additionner. Comme on le voit d'après la figure 4 de ce document, l'additioneur connu nécessite un très grand nombre de circuits dès que le nombre de mots à additionner est de plusieurs dizaines, chaque bloc élémentaire de calcul comportant autant de bascules qu'il y a de mots à additionner.

On connaît d'après IEEE Transactions on Computers, volume C17, n° 10, octobre 1968, pages 992—997, un additionneur série-parallèle, c'est-à-dire un additionneur dans lequel les mots sont introduits séquentiellement, les bits de chacun de ces mots étant traités parallèlement. Cet additionneur est moins rapide que celui mentionné ci-dessus, et nécessite un grand nombre de bascules et de portes logiques reliées entre elles par un grand nombre de liaisons spécifiques ne permettent pas d'utiliser des circuits intégrés couramment disponibles.

La présente invention a pour objet un procédé de traitement de mots binaires permettant d'effectuer l'addition simultanée d'un grand nombre de mots composés d'un grand nombre d'éléments binaires de manière parallèle-série (mots en parallèle, bits en série) avec les moyens actuellement disponibles, et a également pour objet un dispositif additionneur pour la mise en oeuvre de ce procédé.

Le procédé de traitement conforme à la présente invention consiste à partir de mots binaires mémorisés chacun dans un registre à décalage et extraits à la sortie série de ces registres, à extraire et traiter parallèlement tous les éléments binaires de même poids de mots en commençant par ceux de poids le plus faible ces ensembles d'éléments binaires de même poids étant traites selon un fonctionnement "piper-line" et en progressant séquentiellement dans l'ordre vers ceux de poids le plus élevé, à déterminer à chaque fois le nombre de "1" parmi tous les éléments binaires de même poids, à ajouter, pour chaque poids considéré d'éléments binaires, le nombre de "1" de retenue relative aux éléments binaires de poids immédiatement inférieur, à calculer la somme de ces deux nombres et à la divises par deux à envoyer un "1" dans un registre à décalage de sortie lorsque cette somme n'est pas un nombre entier, et un "0" dans le cas contraire, à mémoriser un nombre égal à la partie entière de cette demi-somme, et à extraire ce dernier nombre en tant que nombre de "1" de retenue pour l'utiliser lors du calcul de la demi-somme immédiatement suivante.

Le dispositif de mise en oeuvre du procédé de la présente invention comporte un dispositif transcodeur avec de différentes avec de entrées parallèles qui sont reliées aux sorties série des différents registres à décalage dans lesquels sont mémorisés les mots à additionner ensemble, ce dispositif transcodeur étant réalisé de façon à présenter sur ses sorties la valeur, en binaire pur, du nombre de "1" présents sur ses entrées, les sorties de ce dispositif transcodeur étant reliées par l'intermédiaire d'un registre à bascules bistables à des entrées de poids binaires correspondants d'un circuit additionneur-diviseur binaire parallèle lui-même relié à un registre de mémorisation de la somme des retenues, la sortie de poids le plus faible de ce circuit additionneur-diviseur étant reliée à l'entrée série d'un registre à décalage de sortie.

Selon un mode de réalisation particulier du dispositif de l'invention, destiné à l'addition d'un grand nombre de mots, par exemple supérieur à 16, le dispositif transcodeur a une structure pyramidale à plusieurs étages de traitement, l'étage d'entrée, à la base de la pyramide, comportant en parallèle plusieurs circuits transcodeurs élémentaires fournissant chacun sur ses différentes sorties la valeur, en binaire pur, du nombre de "1" pour chaque poids binaire de tous les mots arrivant sur toutes ses entrées, les sorties d'au moins deux circuits transcodeurs différents étant regroupées, à chaque fois, à l'entrée d'un circuits additionneur présentant sur ses sorties la somme des valeurs d'entrée, plusieurs étages de tels circuits additionneurs étant disposés en cascade, chacun de ces étages comportant un nombre de circuits additionneurs inférieur à celui de l'étage précédent, par exemple la moitié, le dernier étage, au sommet de la pyramide, ne comportant qu'un seul circuit combinatoire. De préférence, les différents étages successifs constituant le dispositif transcodeur sont reliés entre eux par l'intermédiaire de registres à bascules bistables, à entrées et sorties parallèles, tous les registres étant reliés à un générateur commun de signaux d'horloge.

La présente invention sera mieux comprise à l'aide de la description détaillée d'un mode de réalisation pris comme exemple non limitatif et illustré par le dessin annexé, sur lequel:

la figure 1 est un schéma général d'un additionneur rapide conforme à la présente invention, et

la figure 2 est le schéma détaillé du dispositif transcodeur de la figure 1.

L'additionneur rapide représenté schématiquement sur la figure 1 est destiné à l'addition simultanée de 127 mots par exemple, comportant chacun un grand nombre d'éléments binaires, par exemple 32. Toutefois, il est bien entendu que le nombre de mots que l'on peut additionner ensemble peut être différent, et que les mots peuvent contenir un nombre différent d'éléments binaires, les modifications à apporter au dispositif de l'invention étant évidentes pour l'homme de l'art à la lecture de la présence description.

L'additionneur de la figure 1 comporte, côté entrée, *p* registres à décalage, respectivement référencés $1_1$ à $1_p$, *p* étant le nombre de mots à additionneur ensemble, 127 dans le cas présent, ces registres comportant par exemple chacun 32 cellules si le nombre maximal *n* d'éléments binaires des mots à additionner est de 32. Les mots à additionner ensemble peuvent être introduits dans ces registres à décalage soit en mode série, soit en mode parallèle selon la conformation des circuits branchés en amont de l'additionneur.

La sortie série de chaque registre $1_1$ à $1_{127}$ est reliée à une entrée correspondante d'un transcodeur 2 décrit plus en détail ci-dessous. Dans le cas de l'addition de 127 mots, le transcodeur 2 comporte sept sorties de poids binaires respectifs $2^0$ à $2^6$. Les différentes sorties du transcodeur 2 sont reliées, par l'intermédiaire d'un registre 3, à une série d'entrées correspondantes de même poids d'un circuit additionneur-diviseur binaire 4 qui peut par exemple être réalisé de façon connue en soi à l'aide de deux circuits intégrés 74283 de Texas Instruments. Le registre 3 est à entrées et sorties parallèles et se compose par exemple de façon classique de huit cellules à bascule bistable de type D, l'une de ces cellules étant inutilisée.

La sortie de poids le plus faible du circuit additionneur-diviseur 4 est reliée à l'entrée série d'un registre à décalage 5 comportant un nombre de cellules suffisant pour contenir tous les éléments binaires du résultat. Pour l'exemple précité de l'addition de 127 mots de 32 éléments binaires chacun, on démontre facilement que le résultat comporte au maximum 39 éléments binaires. Le registre 5 sera alors un registre standard à 40 cellules.

Les autres sorties du circuit additionneur-diviseur 4 sont respectivement reliées à une autre série de ses entrées de poids correspondants par l'intermédiaire d'un registre 6 à entrées et sorties parallèles, de même constitution que le registre 3.

On peut disposer du résultat de l'addition soit sur la sortie série $S_S$ du registre 5, et ce au fur et à mesure des opérations de calcul décrites ci-dessous, soit sur les sorties parallèles $S_1$ à $S_n$ du registre 5 à la fin des opérations de calcul.

La circulation des informations dans les registres à décalage $1_1$ à $1_p$ et 5, ainsi que le transit dans les registres 3 et 6 sont commandés par un signal d'horloge arrivant sur la borne 7 qui est reliée à l'entrée CK de signaux d'horloge de tous ces registres.

On a représenté sur la figure 2 le schéma détaillé du dispositif transcodeur 2 dans le cas où l'on doit additionner ensemble 127 mots de 32 éléments binaires chacun.

Le transcodeur 2 comporte, côté entrée, un premier étage à huit circuits transcodeurs élémentaires respectivement référencés 8 à 15. Ces circuits transcodeurs, par exemple des FPLA (réseaux logiques programmables) de type 82S100 de Signetics à seize entrées, étant programmés pour fournir chacun sur ses cinq sorties la valeur, en binaire pur, du nombre total de "1" présents sur toutes ses entrées. Les entrées de ces circuits transcodeurs sont respectivement référencées $E_1$ à $E_{127}$, la dernière entrée du circuit 15 n'étant pas utilisée.

Les sorties de chaque fois deux circuits transcodeurs sont regroupées et reliées, par l'intermédiaire de registres à bascules bistables de type D, 16 à 19, à des entrées correspondantes de quatre circuits additionneurs d'un second étage de traitement, respectivement référencés 20 à 23. Chacun de ces quatre circuits additionneurs fournit sur ses sorties la somme de ses deux valeurs d'entrée provenant de deux circuits transcodeurs correspondants. Les sorties des circuits additionneurs 20 à 23 sont également regroupées pour chaque fois deux additionneurs et reliées, par l'intermédiaire de deux registres 24 et 25, à des entrées correspondantes de deux autres additionneurs 26, 27 formant le troisième étage de traitement, et enfin les sorties des additionneurs 26 et 27 sont reliées par l'intermédiaire de deux registres 28, 29 à des entrées correspondantes d'un additionneur 30 formant le dernier étage de traitement du dispositif transcodeur et fournissant sur ses sept sorties 31 à 37 la valeur, en binaire pur, du total des "1" de même rang qui étaient présents simultanément sur les 127 entrées $E_1$ à $E_{127}$.

Les entrées de signal d'horloge de tous les registres sont reliées à une borne 38 qui est elle-même reliée à la borne 7.

On remarquera que la conformation du dispositif transcodeur de la figure 2 est due à l'utilisation de circuits transcodeurs élémentaires 8 à 15 à seize entrées chacun, les plus performants actuellement disponibles, et que, bien entendu, si l'on disposait de circuits transcodeurs à 128 entrées, le dispositif de la figure 2 se réduirait à un seul tel circuit. Toutefois, la structure pyramidale en étages conforme à l'invention pourra toujours être utilisée lorsque l'on voudra additionner ensemble un nombre de mots supérieur au nombre des entrées des circuits transcodeurs disponibles. On remarquera également que les sorties des circuits transcodeurs et des circuits additionneurs peuvent être regroupées de façon différente non symétrique, à condition de respecter les poids des différentes sorties et entrées des circuits transcodeurs ou additionneurs.

Les différents registres du dispositif transcodeur 2 ne sont pas absolument nécessaires, mais il est préférable de les utiliser pour bien synchroniser le fonctionnement des différents étages de ce dispositif transcodeur.

L'additionneur décrit ci-dessus fonctionne de la façon suivante: les mots à additionner ensemble sont mémorisés dans les registres d'entrée $1_1$ à $1_p$ (p = 127 dans l'exemple précité), l'élément binaire de poids le plus faible ($2^0$) de chacun de ces mots étant disponible à l'entrée du dispositif transcodeur 2. On dispose sur les sorties de chacun des circuits 8 à 15 de la valeur en binaire pur du total des "1" de poids $2^0$ présents à l'entrée. Au premier front montant du signal d'horloge arrivant sur la borne 38, ces valeurs sont transférées dans les additionneurs 20 à 23 pour y être additionnées deux à deux. Au deuxième front montant du signal d'horloge, les quatre sommes partielles fournies par les additionneurs 20 à 23 arrivent aux additionneurs 26 et 27 dont les deux sommes partielles parviennent au dernier additionneur 30 au troisième front montant du signal d'horloge, l'additionneur 30 fournissant aussitôt à l'entrée du registre 3 la valeur, en binaire pur, du total des "1" de poids $2^0$ des mots présents dans les registres d'entrée $1_1$ à $1_{127}$.

Ledit premier front du signal d'horloge non seulement transfère dans les additionneurs 20 à 23 les résultats fournis par les circuits transcodeurs 8 à 15 pour tous les éléments binaires de poids $2^0$ des mots à additionner, mais présente aux entrées $E_1$ à $E_{127}$ les éléments binaires de poids $2^1$ qui suivent le même traitement que les éléments binaires de poids $2^0$, et ainsi de suite jusqu'aux éléments binaires de poids $2^{31}$.

Le quatrième front montant du signal d'horloge transfère dans l'additionneur-diviseur 4 le premier contenu utile du registre 3, c'est-à-dire la valeur du total des "1" de poids $2^0$ des mots à additionner. L'additionneur-diviseur 4 additionne cette valeur à la valeur de sortie du registre 6, qui est nulle car au début de l'addition des mots il n'y a pas de retenue, le registre 6 ayant été préalablement remis à zéro de façon appropriée, puis procède à un décalage d'un pas ver la droite (vers les éléments binaires de poids plus faible) de cette valeur, c'est-à-dire qu'il est réalise la division par 2, puis il envoie dans le registre 5 l'élément binaire de poids de plus faible après décalage, à savoir la partie fractionnaire ($2^{-1}$) du résultat de la division et envoie dans le registre 6 les autres éléments binaires décalés. Cela veut dire que l'additionneur 4 effectue la demi-somme de la valeur du total des "1" du poids binaire considéré et de la valeur du total des "1" de retenue, envoie la partie fractionnaire de cette demi-somme dans le registre 5 et en envoie la partie entière dans le registre 6 de retenues.

Au cinquième front montant du signal d'horloge, la valeur du total des éléments de poids binaire $2^1$ des mots à additionner parvient à l'additionneur-diviseur 4 depuis l'additionneur 3, et simultanément, le registre 6 lui envoie la valeur du total des retenues relatives aux éléments binaires de poids $2^0$. L'additionneur-diviseur 4 effectue la somme de ces deux valeurs, puis la divise par deux, envoie la partie fractionnaire du résultat dans le registre 5 et la partie entière dans le registre 6. Ce traitement se poursuit ainsi de suite jusqu'au trente-cinquième front montant du signal d'horloge qui commande l'addition de la valeur du total des "1" de poids $2^{31}$ au total des retenues relatives aux "1" de poids $2^{30}$, puis la division par deux de cette somme, l'envoi dans le registre 5 de l'élément binaire de poids le plus faible et l'envoi dans le registre 6 du total des retenues. Ensuite, plus aucun "1" ne peut parvenir du registre 3 dans l'additionneur-diviseur 4, si l'on suppose qu'aucun autre mot n'est plus chargé dans les registres d'entrée $1_1$ à $1_{127}$. Donc, à partir du trente-sixième front montant du signal d'horloge, seules les retenues circulent entre le registre 6 et l'additionneur-diviseur 4. On peut facilement démontrer que la valeur maximale du total des "1" de retenue parvenant du registre 6 à l'additionneur-diviseur 4 au trente-sixième front montant est de 126. Par conséquent, tous les 1 de retenue seront épuisés au plus tard après le quarante-deuxième front montant du signal d'horloge. Si on prend par exemple un signal d'horloge à 16 MHz, c'est-à-dire de période égale à 62,5 nanosecondes, l'addition des 127 mots de 32 éléments binaires chacun sera terminée en 2,6 $\mu$s, environ, ce qui est tout à fait compatible par exemple avec les durées maximales permises de traitement pour les filtres numériques utilisés en téléphonie MIC, et nettement inférieur au temps de traitement des additionneurs classiques de même capacité.

De manière générale, on peut facilement démontrer que si on procède à l'addition de *p* mots comportant chacun *n* éléments binaires l'addition sera terminée au plus tard en: $n + r + s$ périodes du signal d'horloge, avec: $2^r \leqslant p < 2^{r+1}$ et $s = \mathrm{Log}_2$

$$\left(\frac{2^{r+1}}{16}\right)$$

en supposant que l'on utilise des circuits transcodeurs élémentaires à 16 entrées.

On va maintenant vérifier à l'aide d'un exemple simplifié d'addition binaire que le fonctionnement de l'additionneur de l'invention est correct. On se limitera à l'addition de quatre mots *a*, *b*, *c* et *d* de cinq éléments binaires ("bits") chacun, à savoir: 11110, 01010, 01111, 01111, ce qui fait en décimal: 30, 10, 15 et 15 respectivement. On va placer ces quatre mots à la partie médiane d'un tableau dont la partie supérieure est réservée aux retenues et la ligne inférieure au résultat. On fera l'addition de façon connue analogue à celle utilisée pour réaliser par écrit des additions dans le système décimal.

| Poids des bits | | $2^7$ | $2^6$ | $2^5$ | $2^4$ | $2^3$ | $2^2$ | $2^1$ | $2^0$ |
|---|---|---|---|---|---|---|---|---|---|
| | | 0 | 1 | 1 | 1 | 1 | 1 | 1 | 0 |
| Retenues | | 0 | 0 | 1 | 1 | 1 | 1 | 0 | 0 |
| | | 0 | 0 | 0 | 1 | 0 | 0 | 0 | 0 |
| | a | 0 | 0 | 0 | 1 | 1 | 1 | 1 | 0 |
| Mots | b | 0 | 0 | 0 | 0 | 1 | 0 | 1 | 0 |
| | c | 0 | 0 | 0 | 0 | 1 | 1 | 1 | 1 |
| | d | 0 | 0 | 0 | 0 | 1 | 1 | 1 | 1 |
| Résultat | | 1 | 1 | 0 | 0 | 0 | 1 | 1 | 0 |

Pour réaliser l'addition, on écrit, l'un en dessous de l'autre les quatre mots *a* à *d*, les bits de même poids se trouvant dans la même colonne, et on les additionne mentalement colonne par colonne en commençant par le poids le plus faible et en reportant une retenue dans la colonne de poids supérieur à chaque fois que l'on additionne deux "1". Pour la colonne de poids $2^0$, on trouve deux "1" et il n'y a bien entendu aucune retenue provenant d'une colonne précédente. On écrit donc sur une ligne du résultat un "0" et on reporte une seule retenue dans la colonne de poids $2^1$.

Dans la colonne de poids $2^1$, on trouve quatre "1" provenant des quatre mots et un "1" de retenue, ce qui fait au total cinq "1". On doit donc reporter deux "1" de retenue dans la colonne de poids $2^2$ et on inscrit un "1" pour le résultat dans la colonne $2^1$. On procède ainsi de suite pour toutes les autres colonnes, et on trouve comme résultat: 1000110, c'est-à-dire 70 en notation décimale, qui est bien la somme de 30, 10, 15 et 15.

En analysant cette façon d'additionner, on remarque que dans chaque colonne l'élément binaire du résultat est un "0" lorsque le nombre de "1" des mots et des retenues est pair et un "1" lorsque ce nombre est impair, et qui d'autre part le nombre de "1" de retenue est égal à la moitié du nombre de "1" de la colonne précédente lorsque ce nombre est pair, et à la moitié du nombre immédiatement inférieur lorsque le nombre de "1" est impair, ce qui revient à dire que le nombre de "1" de retenue est égal â la partie entière de la moitié du nombre de "1" de mots et de retenue de la colonne précédente, et que l'élément binaire du résultat est égal à la partie fractionnaire de cette moitié. On peut vérifier facilement que cette règle est valable dans tous les cas. Par conséquent, le procédé de traitement de mots binaires décrit ci-dessus permet d'obtenir effectivement la somme de ces mots, et le dispositif de mise en oeuvre de ce prodécé fonctionne correctement.

**Revendications**

1. Procédé de traitement de mots binaires, permettant d'effectuer l'addition simultanée d'un grand nombre de tels mots, ces mots étant mémorisés chacun dans un registre à décalage et extraits à la sortie série de ces registres, caractérisé par le fait que l'on extrait et traite parallèlement tous les éléments binaires de même poids des mots en commençant par ceux de poids le plus faible ces ensembles d'éléments binaires de même poids étant traités selon un fonctionnement "pipe-line" et en progressant séquentiellement dans l'ordre vers ceux de poids de plus élevé, que l'on détermine à chaque fois le nombre de "1" parmi tous les éléments binaires de même poids, que l'on ajoute, pour chaque poids considéré d'éléments binaires, le nombre de "1" de retenue relative aux éléments binaires de poids immédiatement inférieur, que l'on calcule la somme de ces deux nombres et la divise par deux, que l'on envoie un "1" dans un registre à décalage de sortie (S) lorsque cette demi-somme n'est pas un nombre entier, et un "0" dans le cas contraire, que l'on mémorise (dans 6) un nombre égal à la partie entière de cette demi-somme et que l'on extrait ce dernier nombre en tant que nombre de "1" de retenue pour l'utiliser lors du calcul de la demi-somme immédiatement suivante.

2. Procédé selon la revendication 1, utilisant des circuits transcodeurs à seize entrées pour l'addition de $p$ mots comportant chacun $n$ éléments binaires, caractérisé par le fait que l'addition de ces $p$ mots nécessite au maximum $n + r + s$ périodes de signal d'horloge, avec $2^r \leqslant p < 2^{r+1}$ et $s = \mathrm{Log}_2$

$$\left(\frac{2^{r+1}}{16}\right).$$

3. Dispositif additionneur pour la mise en oeuvre du procédé selon la revendication 1 ou 2, caractérisé par le fait qu'il comporte un dispositif transcodeur (2) avec de différentes entrées qui sont reliées aux sorties série des différents registres à décalage ($1_1 \ldots 1_p$) dans lesquels sont mémorisés les mots à additionner ensemble, ce dispositif transcodeur étant réalisé de façon à présenter sur ses sorties la valeur, en binaire pur, du nombre de "1" présents sur ses entrées, les sorties de ce dispositif transcodeur étant reliées par l'intermédiaire d'un registre à bascules bistables (3) à des entrées de poids binaires correspondants d'un circuit additionneur-diviseur binaire parallèle (4) lui-même relié à un registre de mémorisation de la somme des retenues (6), la sortie de poids le plus faible de ce circuit additionneur-diviseur étant reliée à l'entrée série d'un registre à décalage de sortie (5).

4. Dispositif additionneur selon la revendication 3, caractérisé par le fait que le dispositif transcodeur a une structure pyramidale à plusieurs étages de traitement, l'étage d'entrée, à la base de la pyramide, comportant en parallèle plusieurs circuits transcodeurs élémentaires (8 ... 15) fournissant chacun sur ses différentes sorties la valeur, en binaire pur, du nombre de "1", pour chaque poids binaire de tous les mots arrivant sur toutes ses entrées, les sorties d'au moins deux circuits transcodeurs différents étant regroupées à chaque fois à l'entrée d'un circuit additionneur (20—23), plusieurs étages de tels circuits additionneurs étant disposés en cascade, le dernier étage, au sommet de la pyramide, ne comportant qu'un seul circuit additionneur (30).

5. Dispositif additionneur selon la revendication 4, caractérisé par le fait que les différents étages successifs constituant le dispositif transcodeur sont reliés entre eux par l'intermédiaire de registres à bascules bistables (16—19, 24, 25, 28, 29), à entrées et sorties parallèles, tous les registres étant reliés à générateur commun de signaux d'horloge.

**Patentansprüche**

1. Verfahren zur Verarbeitung von Binärwörtern, durch welches die gleichzeitige Addition einer großen Anzahl von derartigen Wörten durchgeführt werden kann, wobei jedes dieser Wörter in einem Schieberegister gespeichert und am seriellen Ausgang dieses Registers wieder entnommen wird, dadurch gekennzeichnet, daß alle Binärelemente derselben Wertigkeit der Wörter parallel entnommen und verarbeitet werden, indem mit denjenigen der geringsten Wertigkeit begonnen wird, wobei diese Mengen von Binärelementen derselben Wertigkeit nach dem "Pipeline"-Prinzip verarbeitet werden, und indem sequenziell in der Reihenfolge zu den Binärelementen mit der höchsten Wertigkeit fortgeschritten wird, daß jedesmal die Anzahl von Binärwerten "1" unter allen Binärelementen derselben Wertigkeit bestimmt wird, daß für jede betrachtete Wertigkeit von Binärelementen die Übertragsanzahl von Binärwerten "1" für die Binärelemente mit unmittelbar niedrigerer Wertigkeit hinzugefügt wird, daß die Summe dieser beiden Anzahlen berechnet und durch zwei dividiert wird, daß in ein Ausgangs-Schieberegister eine "1" eingegeben wird, wenn diese Halbsumme keine ganze Zahl ist, und im entgegengesetzten Fall eine "0" eingegeben wird, daß (in 6) eine Zahl gespeichert wird, die gleich dem ganzzahligen Teil dieser Halbsumme ist, und daß diese letztgenannte Zahl als Übertragsanzahl von Binärwerten "1" entnommen wird, um sie für die Berechnung der unmittelbar anschließenden Halbsumme zu verwenden.

2. Verfahren nach Anspruch 1, bei welchem Code-Umsetzschaltungen mit 16 Eingängen zum Addieren von p Wörten zu jeweils n Binärelementen verwendet werden, dadurch gekennzeichnet, daß die Addition dieser p Wörter maximal $n + r + s$ Taktsignalperioden benötigt, mit

$$2^r \leqslant p < 2^{r+1} \text{ und } s = \mathrm{Log}_2 \left(\frac{2^{r+1}}{16}\right).$$

3. Addiervorrichtung zur Durchführung des Verfahrens nach Anspruch 1 oder 2, dadurch gekennzeichnet, daß sie eine Codeumsetzvorrichtung (2) mit verschiedenen Eingängen aufweist, die an die seriellen Ausgänge der verschiedenen Schieberegister ($1_1 \ldots 1_p$) angeschlossen sind, in welchen die aufzusummierenden Wörter gespeichert sind, wobei diese Codeumsetzvorrichtung derart ausgebildet ist, daß sie an ihren Ausgängen den reinen Binärwert der Anzahl von Binärzahlen "1" angibt, die an ihren Eingängen vorhanden sind, wobei die Ausgänge dieser Codeumsetzvorrichtung über ein Register mit bistabilen Kippschaltungen (3) an Eingänge entsprechender Binärwertigkeit einer binären Parallel-Addier-Teiler-Schaltung (4) angeschlossen sind, die ihrerseits an ein Register (6) zum Speichern der Summe von Überträgen angeschlossen ist, wobei der niedrigestwertige Ausgang dieser Addier-Dividier-Schaltung mit dem seriellen Eingang eines Ausgangs-Schieberegisters (5) verbunden ist.

4. Addiervorrichtung nach Anspruch 3, dadurch gekennzeichnet, daß die Codeumsetzvorrichtung eine Pyramidenstruktur mit mehreren Verarbeitungsniveaus aufweist, die an der Basis der Pyramide befindliche Eingangsstufe mehrere parallele Elementar-Codeumsetzschaltungen (8 ... 15) umfaßt, die jeweils an ihren verschiedenen Ausgängen den reinen Binärwert der Anzahl von Binärwerten "1" für jede Binärwertigkeit aller an allen ihren Eingängen ankommenden Wörter angeben, die Ausgänge von wenigstens zwei verschiedenen Codeumsetzschaltungen jeweils am Eingang einer Addierschaltung (20—23) zusammengefaßt sind, mehrere Stufen dieser Addierschaltungen in Kaskade angeordnet sind und die letzte Stufe am Scheitel der Pyramide nur eine einzige Addierschaltung (30) aufweist.

5. Addiervorrichtung nach Anspruch 4, dadurch gekennzeichnet, daß die verschiedenen aufeinanderfolgenden Stufen, welche die Codeumsetzvorrichtung bilden, untereinander über Register mit bistabilen Kippschaltungen (16—19, 24, 25, 28, 29) mit parallelen Ein- und Ausgängen verbunden sind und sämtliche Register an einen gemeinsamen Taktsignalgenerator angeschlossen sind.

## Claims

1. Method of processing binary words for simultaneously summing a large number of such words, each of these words being stored in a shift register and extracted from the serial outputs of these registers, characterized by the fact that all of the binary elements of the same weight of the words are extracted and processed in parallel, beginning with the least significant binary elements, these sets of binary elements of the same weight being processed on a "pipeline" basis, proceeding sequentially in the order towards the most significant ones, that each respective number of values "1" among all of the binary elements of the same weight is determined, that, for each respective weight of binary elements, the number of "1"-carries relative to the binary elements of immediately lower weight is added, that the sum of these two numbers is calculated and divided by two, that a "1" is sent into a shift register when this half-sum is not an integer, and a "0" in the contrary case, that a number equal to the integer portion of this half-sum is stored (in 6), and that the latter number is extracted as the number of "1"-carries to be used for the calculation of the immediately following half-sum.

2. Method according to claim 1, in which sixteen input-code converters are used for adding *p* words each having *n* binary elements, characterized by the fact that the addition of these *p* words requires a maximum of $n + r + s$ clock signal periods, with

$$2^r \leqslant p < 2^{r+1} \text{ and } s = \mathrm{Log}_2 \left(\frac{2^{r+1}}{16}\right)$$

3. Adder device for performing the method of claims 1 or 2, characterized by the fact that it comprises a code converter device (2) having different inputs connected to the serial outputs of the different shift registers ($1_1 \ldots 1_p$) wherein the words to be added are stored, this code converter device being arranged to present on its outputs the genuine binary value of the number of "1"-values occurring on its inputs, the outputs of this code converter device being connected through a bistable-type register (3) to the inputs of corresponding binary weights of a binary, parallel adder-divider circuit (4) which is in turn connected to a register for storing the number of carries (6), the least significant output of this adder-divider circuit being connected to the serial input of an output shift register (5).

4. Adder device in accordance with claim 3, characterized by the fact that the code converter device has a pyramidal structure comprising a plurality of processing levels, the input level at the base of the pyramid comprising, in parallel, a plurality of elementary code converter circuits (8 ... 15) each providing on its various outputs the genuine binary value of the number of "1"-values for each binary weight of all of the words arriving on all of its inputs, the outputs of at least two different code-converter circuits being respectively combined at the input of an adder circuit (20—23), a plurality of levels of these adder circuits being arranged in cascade, the last level at the vertex of the pyramid comprising only a single adder circuit (30).

5. Adder device according to claim 4, characterized by the fact that the different successive levels forming the code converter device are interconnected through bistable -type registers (16—19, 24, 25, 28, 29) having parallel inputs and parallel outputs, all of these registers being connected to a common clock signal generator.

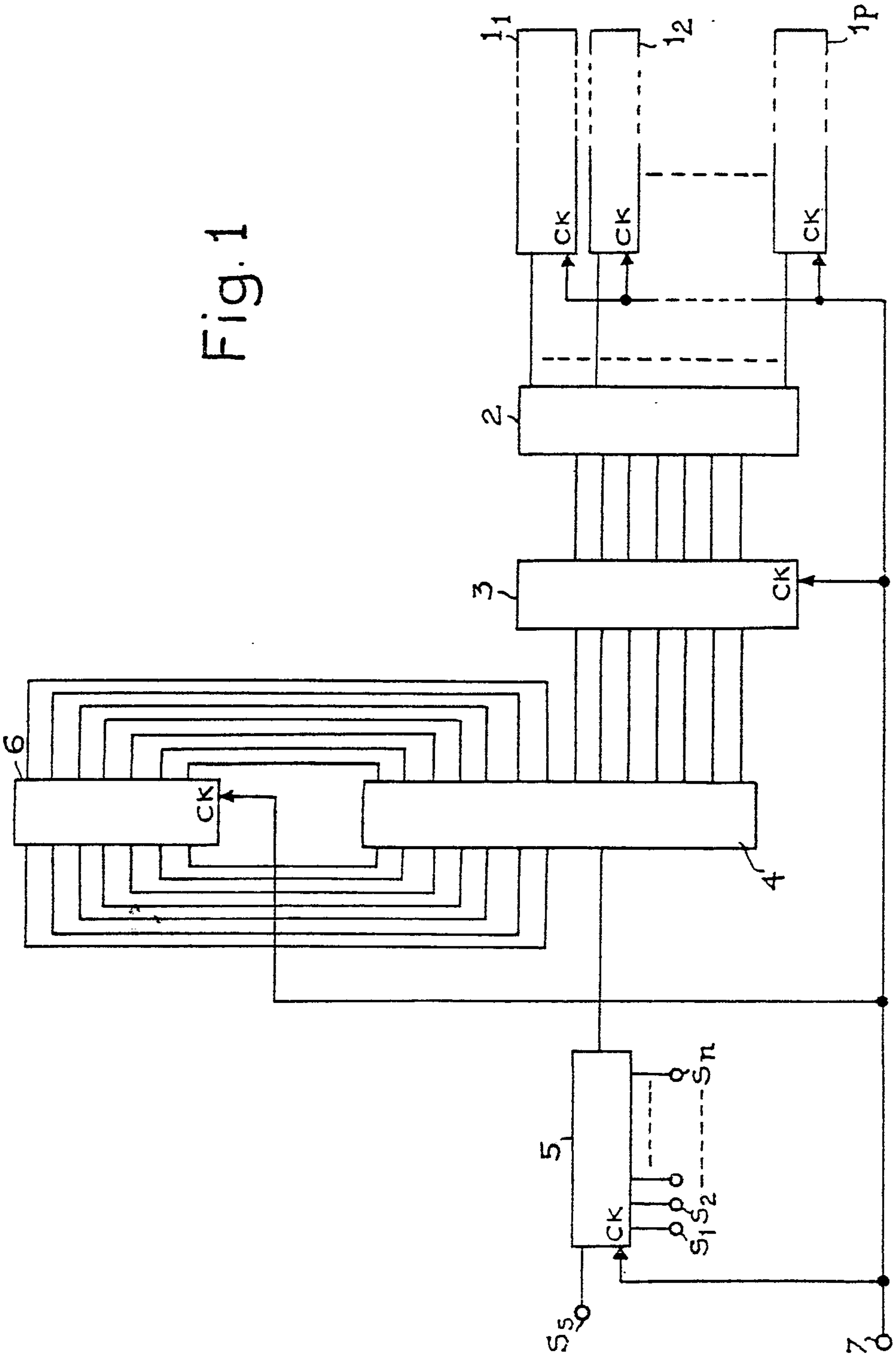


Fig. 1

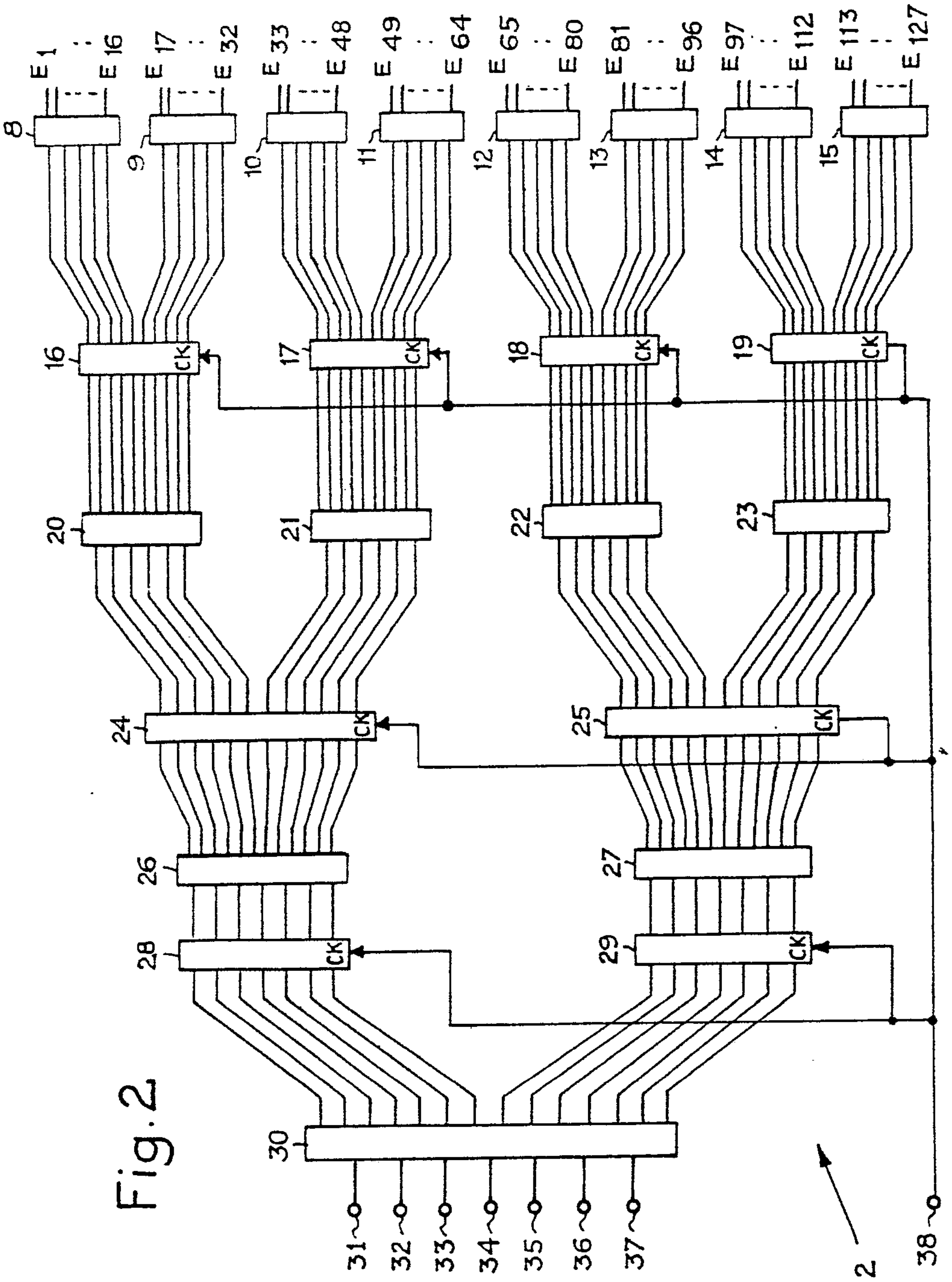
E 1 . . E 16
E 17 . . E 32
E 33 . . E 48
E 49 . . E 64
E 65 . . E 80
E 81 . . E 96
E 97 . . E 112
E 113 . . E 127
8
9
10
11
12
13
14
15
16
17
18
19
CK
CK
CK
CK
20
21
22
23
24
25
CK
CK
26
27
28
29
CK
CK
30
31
32
33
34
35
36
37
38
2

Fig.2